# EUROPÄISCHE PATENTSCHRIFT

(11) **EP 2 886 382 B1**
(45) Veröffentlichungstag und Bekanntmachung des Hinweises auf die Patenterteilung: **02.01.2019**
(21) Anmeldenummer: 14193128.7
(22) Anmeldetag: 14.11.2014
(51) Int. Cl.: B60K 6/12

(54) **Antriebssystem, insbesondere für eine selbstfahrende Baumaschine, insbesondere Bodenverdichter**
Drive system, in particular for a self-propelled construction machine, in particular soil compactor
Système d'entraînement, en particulier pour un engin automobile, en particulier un rouleau compresseur

(30) Priorität: 20.12.2013 DE 102013227007
(43) Veröffentlichungstag der Anmeldung: 24.06.2015
(73) Patentinhaber: Hamm AG, 95643 Tirschenreuth (DE)
(72) Erfinder: Röhr, Andreas, 92637 Weiden (DE); Henker, Thomas, 95643 Tirschenreuth (DE); Pieske, Ronny, 08297 Zwönitz (DE)
(74) Vertreter: Ruttensperger Lachnit Trossin Gomoll

(56) Entgegenhaltungen:
- EP-A1- 1 935 697
- WO-A1-2013/074164
- DE-A1-102010 063 255
- DE-A1-102011 104 919

## Beschreibung

Die vorliegende Erfindung betrifft ein Antriebssystem gemäß dem Oberbegriff des Anspruchs 1, insbesondere für eine selbstfahrende Baumaschine, insbesondere Bodenverdichter, umfassend:
- ein Antriebsaggregat,
- wenigstens einen Hydraulikkreislauf mit einer durch das Antriebsaggregat antreibbaren Hydraulikpumpe,
- eine Hydraulik-Antriebsunterstützungseinheit mit einer HydraulikPumpe/Motor-Baugruppe und wenigstens einem Druckfluidspeicher, wobei die Hydraulik-Pumpe/Motor-Baugruppe mit dem Antriebsaggregat oder/und wenigstens einem Hydraulikkreislauf antriebsmäßig gekoppelt oder koppelbar ist, wobei die Hydraulik-Pumpe/Motor-Baugruppe in einem Ladebetriebszustand durch das Antriebsaggregat oder/und wenigstens einen Hydraulikkreislauf als Pumpe zum Beladen wenigstens eines Druckfluidspeichers betreibbar ist und in einem Antriebsunterstützungsbetriebszustand als Motor zur Bereitstellung eines Antriebsunterstützungsdrehmomentes für die Hydraulikpumpe wenigstens eines Hydraulikkreislaufs betreibbar ist.

Aus der WO 2013/074164A1 ist ein Antriebssystem einer als Radlader ausgebildeten Baumaschine bekannt. Bei diesem bekannten Antriebssystem ist ein Antriebsaggregat über eine Getriebeanordnung mit verschiedenen Hydraulikkreisläufen antriebsmäßig gekoppelt. Diese Hydraulikkreisläufe umfassen einen Hydraulik-Fahrkreislauf mit einer durch das Antriebsaggregat antreibbaren Hydraulik-Fahrpumpe und einem im Betrieb der Hydraulik-Fahrpumpe durch das strömende Fluid angetriebenen Hydraulik-Fahrmotor zum Antrieb der Antriebsräder des Radladers. Ferner sind ein bzw. mehrere Hydraulik-Arbeitskreisläufe vorgesehen. Auch diese umfassen jeweils eine durch das Antriebsaggregat über die Getriebeanordnung antreibbare Hydraulik-Arbeitspumpe. Durch den durch diese Pumpen generierten Hydraulikdruck können beispielsweise Kolben/Zylinder-Einheiten aktiviert werden, um im Arbeitsbetrieb des Radladers eine Schaufel zu bewegen. Dieses Antriebssystem umfasst ferner eine Hydraulik-Antriebsunterstützungseinheit. Diese umfasst eine durch das Antriebsaggregat über die Getriebeanordnung antreibbare Hydraulik-Pumpe/Motor-Baugruppe, welche im Pumpenbetrieb einen Druckfluidspeicher lädt, also den Druck des darin gespeicherten Fluids erhöht. Die Hydraulik-Pumpe/Motor-Baugruppe dieser Hydraulik-Antriebsunterstützungseinheit kann auch als Hydraulikmotor betrieben werden, um unter Entspannung des Drucks in dem Druckfluidspeicher ein Drehmoment zu generieren, welches über die Getriebeanordnung auf die verschiedenen Hydraulikkreisläufe, also den Hydraulik-Fahrkreislauf und den bzw. die Hydraulik-Arbeitskreisläufe übertragen werden kann. Die Hydraulik-Antriebsunterstützungseinheit kann somit ein Antriebsunterstützungsdrehmoment liefern.

Ein Antriebssystem gemäß dem Oberbegriff des Anspruchs 1 ist aus der DE 10 2010 063 255 A1 bekannt. Bei diesem bekannten Antriebssystem kann über ein Nebenantrieb eines Antriebsaggregats eine HydraulikPumpe/Motor-Baugruppe betrieben werden, um den Druck in einem Druckfluidspeicher zu erhöhen. Die im Druckfluidspeicher gespeicherte Energie kann dazu genutzt werden, in Spitzenlastzuständen ein Unterstützungsdrehmoment über den Nebenantrieb in das Antriebsaggregat einzuleiten. Dies schafft die Möglichkeit, das Antriebsaggregat so zu dimensionieren, dass es für den normalen Arbeitsbetrieb ausreicht, um das erforderliche Antriebsdrehmoment zu liefern. Bei Auftreten von Spitzenlasten muss dann jedoch der mit Druckfluid geladene Druckspeicher als zusätzliche Energiequelle genutzt werden.

Es ist die Aufgabe der vorliegenden Erfindung, ein Antriebssystem, insbesondere für eine selbstfahrende Baumaschine, insbesondere Bodenverdichter, vorzusehen, welches eine effizientere Ausnutzung der zur Verfügung stehenden Energiequellen Antriebsaggregat und Hydraulik-Antriebsunterstützungseinheit ermöglicht.

Erfindungsgemäß wird diese Aufgabe gelöst durch ein Antriebssystem, insbesondere für eine selbstfahrende Baumaschine, insbesondere Bodenverdichter, gemäß Anspruch 1. Dieses umfasst:
- ein Antriebsaggregat,
- wenigstens einen Hydraulikkreislauf mit einer durch das Antriebsaggregat antreibbaren Hydraulikpumpe,
- eine Hydraulik-Antriebsunterstützungseinheit mit einer HydraulikPumpe/Motor-Baugruppe und wenigstens einem Druckfluidspeicher, wobei die Hydraulik-Pumpe/Motor-Baugruppe mit dem Antriebsaggregat oder/und wenigstens einem Hydraulikkreislauf antriebsmäßig gekoppelt oder koppelbar ist, wobei die Hydraulik-Pumpe/Motor-Baugruppe in einem Ladebetriebszustand durch das Antriebsaggregat oder/und wenigstens einen Hydraulikkreislauf als Pumpe zum Beladen wenigstens eines Druckfluidspeichers betreibbar ist und in einem Antriebsunterstützungsbetriebszustand als Motor zur Bereitstellung eines Antriebsunterstützungsdrehmomentes für die Hydraulikpumpe wenigstens eines Hydraulikkreislaufs betreibbar ist.

Ferner ist vorgesehen, dass ein durch das Antriebsaggregat bereitstellbares maximales Antriebsdrehmoment kleiner ist, als ein zum Betreiben wenigstens eines Hydraulikkreislaufs aufzubringendes maximales Anforderungsdrehmoment.

Bei der vorliegenden Erfindung wird die Hydraulik-Pumpe/Motor-Baugruppe im Ladebetriebszustand nur dann im Wesentlichen durch das Antriebsaggregat angetrieben, wenn der Ladezustand wenigstens eines Druckfluidspeichers nicht über einer vorbestimmten Schwellenbeladung ist. Bei über der Schwellenbeladung liegendem Ladezustand des wenigstens einen Druckfluidspeichers wird die Hydraulik-Pumpe/Motor-Baugruppe im Ladebetriebszustand im Wesentlichen durch wenigstens einen Hydraulikkreislauf angetrieben wird.

Das erfindungsgemäß nach Art eines Hybridsystems aufgebaute Antriebssystem ist also grundsätzlich derart ausgelegt, dass das als Hauptantriebsenergiequelle vorgesehene Antriebsaggregat alleine nicht dazu in der Lage ist, das bei maximaler Belastung angeforderte Drehmoment, also das maximale Anforderungsdrehmoment, alleine bereitzustellen. Ein derartiger Zustand vergleichsweise hoher Belastung kann beispielsweise dann auftreten, wenn eine Baumaschine, wie z. B. ein Bodenverdichter, kurzzeitig auf einer Wegstrecke mit sehr starker Steigung bewegt werden muss oder beispielsweise über eine Randsteinkante hinweg bewegt werden muss oder Zusatzaggregate in Betrieb gesetzt werden müssen. In diesen Zuständen, in welchen das Anforderungsdrehmoment das von einem Antriebsaggregat maximal bereitstellbare Drehmoment, also das maximale Antriebsdrehmoment, übersteigt, kann die Hydraulik-Antriebsunterstützungseinheit genutzt werden, um durch Bereitstellung des Antriebsunterstützungsdrehmomentes einen Zustand zu generieren, in welchem das Antriebsaggregat und die Hydraulik-Antriebsunterstützungseinheit parallel wirken und somit ein Gesamtantriebsdrehmoment bereitstellen, das ausreicht, um auch in derartigen Zuständen vergleichsweise großer Drehmomentenanforderung eine mit dem erfindungsgemäßen Antriebssystem ausgestattete Maschine in der gewünschten Betriebsart betreiben zu können.

Erfindungsgemäß ist ein Ladezustand mit der vorbestimmten Schwellenbeladung eines Druckfluidspeichers unabhängig davon sichergestellt, ob neben dem Antriebsaggregat als Antriebsenergiequelle für die HydraulikPumpe/Motor-Einheit auch in anderen Systembereichen frei werdende Energie zum Aufladen des Druckspeichers genutzt werden kann. Hierzu kann beispielsweise vorgesehen sein, dass die vorbestimmte Schwellenbeladung ein Ladezustand mit einer Beladung im Bereich von 80 bis 90 %, vorzugsweise etwa 85 %, einer maximalen Beladung des wenigstens einen Druckspeichers ist.

Die im Zuge einer Energierückgewinnung nutzbare Energie kann primär dazu genutzt werden, hinausgehend über die beispielsweise durch das Antriebsaggregat bereitzustellende Schwellenbeladung den wenigstens einen Druckfluidspeicher noch weiter zu laden, insbesondere bis dieser vollständig geladen ist. Dieses Zusammenwirken des Antriebsaggregats und wenigstens eines Hydraulikkreislaufs zum Beladen eines Druckfluidspeichers stellt also einerseits immer eine ausreichende Beladung des Druckfluidspeichers sicher, um die Hydraulik-Antriebsunterstützungseinheit zum Erzeugen eines Antriebsunterstützungsdrehmoments nutzen zu können, gewährleistet aber andererseits, dass grundsätzlich in einem Druckspeicher der Hydraulik-Antriebsunterstützungseinheit ausreichend Kapazität vorhanden ist, um bei einem Energierückgewinnungsvorgang die Beladung weiter erhöhen zu können, also die beispielsweise in einem Verzögerungsvorgang freiwerdende Energie speichern zu können.

Besonders vorteilhaft ist es, wenn ein durch das maximale Antriebsdrehmoment und ein durch die Hydraulik-Antriebsunterstützungseinheit bereitstellbares maximales Antriebsunterstützungsdrehmoment bereitgestelltes maximales Gesamtantriebsdrehmoment größer oder gleich dem maximalen Anforderungsdrehmoment ist. Somit ist gewährleistet, dass selbst beim Auftreten der höchsten Spitzenanforderung durch die Mitaktivierung der Hydraulik-Antriebsunterstützungseinheit ein ausreichen großes Gesamtantriebsdrehmoment zur Verfügung gestellt werden kann.

Insbesondere bei Eingliederung des erfindungsgemäßen Antriebssystems in eine Baumaschine, wie z. B. einen Bodenverdichter, einen Radlader oder dergleichen, wird vorgeschlagen, dass als Hydraulikkreislauf wenigstens ein Hydraulik-Fahrkreislauf für den Fahrantrieb vorgesehen ist mit einer durch das Antriebsaggregat oder/und die Hydraulik-Antriebsunterstützungseinheit antreibbaren Hydraulik-Fahrpumpe oder/und wenigstens ein Hydraulik-Arbeitskreislauf für den Arbeitsbetrieb vorgesehen ist mit einer durch das Antriebsaggregat oder/und die Hydraulik-Antriebsunterstützungseinheit antreibbaren Hydraulik-Arbeitspumpe. Der Hydraulik-Fahrkreislauf sorgt dafür, dass die Maschine sich zur Durchführung bestimmter Arbeitsvorgänge voranbewegen kann, während der bzw. die Hydraulik-Arbeitskreisläufe die im Voranbewegungszustand oder auch im Stillstand einer derartigen Maschine zu betreibenden Systembereiche antreibt.

Insbesondere dann, wenn das erfindungsgemäße Antriebssystem in einen Bodenverdichter integriert ist, welcher zumindest eine Verdichterwalze und dieser zugeordnet eine Unwuchtmassenanordnung aufweist, um durch Vibrationsbewegung oder/und Oszillationsbewegung ein optimiertes Verdichtungsergebnis erreichen zu können, wird vorgeschlagen, dass wenigstens ein Hydraulik-Arbeitskreislauf zum Antrieb einer in Zuordnung zu einer Verdichterwalze eines Bodenverdichters vorgesehenen Unwuchtmassenanordnung vorgesehen ist. Das Inbetriebsetzen einer derartigen Unwuchtmassenanordnung kann durch die dabei zu überwindende Massenträgheit zu einer sehr hohen Drehmomentenanforderung führen, die gemäß den Prinzipien der vorliegenden Erfindung auch dann durch das Gesamtantriebsdrehmoment abgedeckt werden kann, wenn in Verbindung mit dem etwas schwächer dimensionierten Antriebsaggregat die Hydraulik-Antriebsunterstützungseinheit in einer derartigen Betriebsphase aktiviert wird. Ferner kann die bei dem Außerbetriebsetzen einer derartigen Unwuchtmassenanordnung durch die Massenträgheit frei werdende Energie dazu genutzt werden, die Hydraulik-Pumpe/Motor-Baugruppe im Ladebetriebszustand als Pumpe zu betreiben, um im Nachlauf der Unwuchtmassenanordnung den Fluiddruck in einem Druckfluidspeicher zu erhöhen.

Um bei dem erfindungsgemäßen Antriebssystem einen Druckfluidspeicher der Hydraulik-Antriebsunterstützungseinheit laden und zur Erzeugung eines Antriebsunterstützungsdrehmoments auch wieder entladen zu können bzw. dann, wenn das System außer Betrieb gesetzt wird, einen nicht bzw. nicht vollständig entladenen Druckfluidspeicher entspannen zu können, wird weiter vorgeschlagen, dass die Hydraulik-Antriebsunterstützungseinheit eine Lade/Entlade-Ventileinheit zum wahlweisen Freigeben/Unterbrechen einer Strömungsverbindung zwischen der Hydraulik-Pumpe/Motor-Baugruppe und wenigstens einem Druckfluidspeicher wenigstens in Strömungsrichtung vom Druckfluidspeicher zur Hydraulik-Pumpe/Motor-Baugruppe umfasst und eine Entspannungs-Ventileinheit zum wahlweisen Freigeben/Unterbrechen einer Strömungsverbindung zwischen wenigstens einem Druckfluidspeicher und einem Fluidreservoir wenigstens in Strömungsrichtung vom Druckfluidspeicher zum Fluidreservoir umfasst.

Gemäß einem die Betriebssicherheit in vorteilhafter Weise erhöhenden Aspekt der vorliegenden Erfindung wird vorgeschlagen, dass die Lade/Entlade-Ventileinheit in einen die Strömungsverbindung unterbrechenden Grundzustand vorgespannt ist oder/und dass die Entspannungs-Ventileinheit in einen die Strömungsverbindung freigebenden Grundzustand vorgespannt ist. Durch das Vorspannen der Lade/Entlade-Ventileinheit in einen Grundzustand, in welchem die Strömungsverbindung zwischen einem Druckfluidspeicher und der Hydraulik-Pumpe/Motor-Baugruppe unterbrochen ist, wird eine spontane Entladung des Druckfluidspeichers beispielsweise dann, wenn durch einen Systemausfall eine Erregung dieser Ventileinheit nicht mehr möglich ist, vermieden. Gleichzeitig sorgt das Vorspannen der Entspannungs-Ventileinheit in einen die Strömungsverbindung herstellenden Grundzustand dafür, dass bei Auftreten eines derartigen Fehlers der Druckfluidspeicher sich in Richtung zum Fluidreservoir entleeren, also entspannen kann.

Bei dem erfindungsgemäß aufgebauten Antriebssystem umfasst vorteilhafterweise die Hydraulik-Antriebsunterstützungseinheit einen offenen Kreislauf. Dies bedeutet, dass dieser Kreislauf grundsätzlich drucklos und zu einem Fluidreservoir offen ist, aus welchem die Hydraulik-Pumpe/Motor-Baugruppe Fluid zum Beladen eines Druckfluidspeichers fördert und in welches aus dem Druckfluidspeicher abgegebenes Druckfluid zurückströmen kann. Dabei ist es besonders vorteilhaft, wenn zwischen wenigstens einem Fluidkreislauf, vorzugsweise allen Fluidkreisläufen, und der Hydraulik-Antriebsunterstützungseinheit keine Fluidaustauschverbindung besteht. Dies gestattet die Ausgestaltung dieser Hydraulikkreisläufe als in sich geschlossene Hochdruckkreisläufe.

Bei dem erfindungsgemäßen Antriebssystem umfasst vorteilhafterweise das Antriebsaggregat eine Diesel-Brennkraftmaschine. Diese zeichnet sich einerseits durch einen besonders effizienten Kraftstoffeinsatz und andererseits auch durch ein vergleichsweise hohes Antriebsdrehmoment aus.

Eine besonders effiziente Kopplung zwischen einem bzw. mehreren Hydraulikkreisläufen und der Hydraulik-Antriebsunterstützungseinheit kann dadurch erreicht werden, dass das Antriebsaggregat und die Hydraulik-Antriebsunterstützungseinheit zueinander parallel über eine Getriebeanordnung mit wenigstens einem Hydraulikkreislauf, vorzugsweise einer Mehrzahl von Hydraulikkreisläufen, gekoppelt oder koppelbar ist. Somit wird ein direkter Energiefluss zwischen dem bzw. den Hydraulikkreisläufen und der Hydraulik-Antriebsunterstützungseinheit ermöglicht, ohne dass das dazwischen übertragene Drehmoment über das Antriebsaggregat geleitet werden muss.

Die vorliegende Erfindung betrifft ferner eine selbstfahrende Baumaschine, insbesondere Bodenverdichter, umfassend ein Antriebssystem, welches die vorangehend angesprochenen technischen Ausgestaltungsmerkmale einzeln oder in beliebiger Kombination aufweist.

Die Erfindung wird nachfolgend mit Bezug auf die beiliegenden Figuren detailliert beschrieben. Es zeigt:
- Fig. 1: in prinzipartiger Darstellung den Aufbau eines Antriebssystems für eine selbstfahrende Baumaschine;
- Fig. 2: eine als selbstfahrender Bodenverdichter ausgebildete Baumaschine, in welcher das Antriebssystem der Fig. 1 zur Anwendung kommen kann.

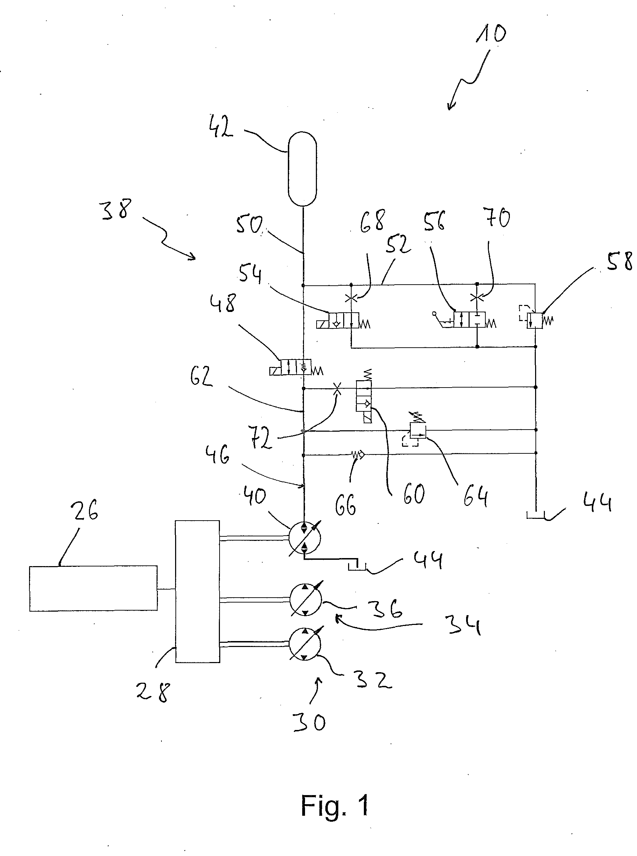

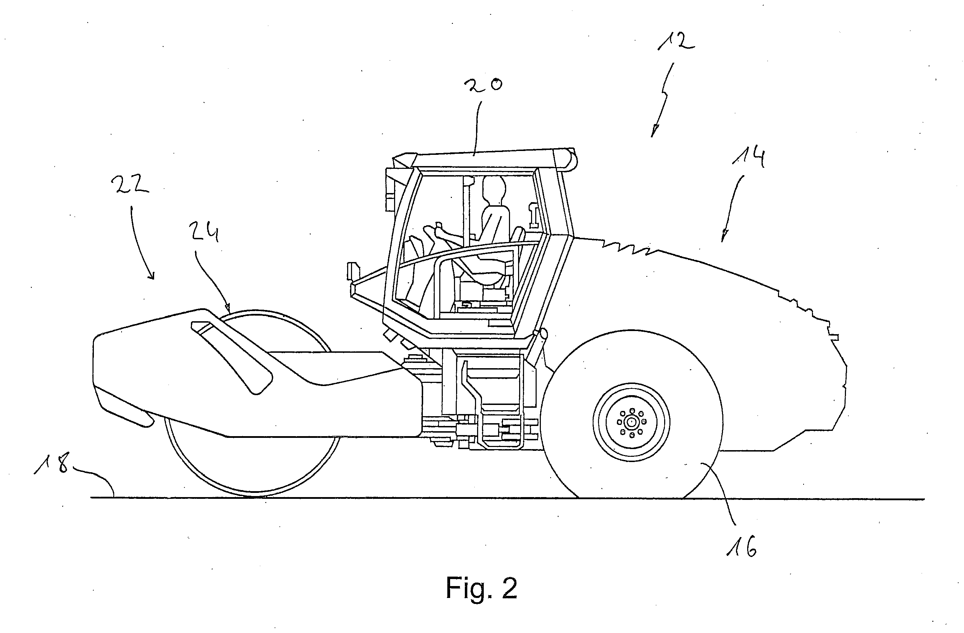

Bevor im Folgenden mit Bezug auf die Fig. 1 ein erfindungsgemäßes Antriebssystem 10 detailliert erläutert wird, wird im Folgenden mit Bezug auf die Fig. 2 der grundsätzliche Aufbau einer Baumaschine 12 erläutert, in welche das Antriebssystem 10 der Fig. 1 integriert werden kann. Diese Baumaschine 10 umfasst an einem Hinterwagen 14 Antriebsräder 16, die durch das Antriebssystem 10 zur Voranbewegung der als Bodenverdichter ausgebildeten Baumaschine 12 auf dem zu verdichtenden Untergrund 18 angetrieben werden können. Am Hinterwagen 14 ist ferner eine Führerkabine 20 vorgesehen, in welcher eine die Baumaschine 12 steuernde Person Platz findet und von welcher aus die verschiedenen Funktionalitäten der Baumaschine 12 gesteuert werden können.

An einem zum Lenken der als Bodenverdichter ausgebildeten Baumaschine 12 mit dem Hinterwagen 14 gelenkig verbundenen Vorderwagen 22 ist eine Verdichterwalze 24 vorgesehen. Mit dieser Verdichterwalze 24 wird der Untergrund 18, auf welchem die Baumaschine 12 sich bewegt, verdichtet. Um diesen Verdichtungsvorgang in definierter Art und Weise durchführen zu können, kann der Verdichterwalze 24 eine Unwuchtmassenanordnung zugeordnet sein, die beispielsweise im Inneren der Verdichterwalze 24 aufgenommen sein kann und zur Erzeugung einer Vibrationsbewegung, also einer periodischen Auf-Ab-Bewegung der Verdichterwalze 24, oder/und zur Erzeugung einer Oszillationsbewegung, also einer Hin-Her-Bewegung der Verdichterwalze 24 in Umfangsrichtung, in Betrieb gesetzt werden kann. Auch hierzu kann, wie im Folgenden noch dargelegt, das in Fig. 1 dargestellte Antriebssystem 10 eingesetzt werden.

Es sei darauf hingewiesen, dass in Fig. 2 die in Form eines Bodenverdichters dargestellte Baumaschine 12 nur hinsichtlich ihrer wesentlichen Aspekte und nur als ein Beispiel einer Maschine dargestellt ist, in welcher das Antriebssystem 10 der Fig. 1 Anwendung finden kann. Beispielsweise könnte bei Ausgestaltung als Bodenverdichter dieser anstelle der Antriebsräder 16 mit einer weiteren, dann beispielsweise auch zum Vortrieb des Bodenverdichters durch das Antriebssystem 10 der Fig. 1 zur Drehung anzutreibenden Verdichterwalze ausgestaltet sein. Auch könnte die Baumaschine 12 in Form eines Radladers, einer Planierraupe, eines Baggers oder dergleichen ausgebildet sein.

Das Antriebssystem 10 der Fig. 1 umfasst als Hauptenergiequelle ein beispielsweise als Diesel-Brennkraftmaschine ausgebildetes Antriebsaggregat 26. Dieses Antriebsaggregat 26 ist beispielsweise über eine Kupplungsanordnung, einen hydrodynamischen Drehmomentwandler oder dergleichen mit einer Getriebeanordnung 28 antriebsmäßig gekoppelt oder koppelbar. Über die Getriebeanordnung 28 kann das vom Antriebsaggregat 26 bereitgestellte Antriebsdrehmoment auf verschiedene Systembereiche übertragen bzw. verteilt werden.

Einer dieser Systembereiche umfasst einen Hydraulik-Fahrkreislauf 30 mit einer in diesen integrierten Hydraulik-Fahrpumpe 32. Diese kann mit der Getriebeanordnung 28 permanent gekoppelt sein oder beispielsweise über eine Kupplungsanordnung an die Getriebeanordnung 28 angekoppelt sein bzw. werden. Bei Antreiben der Hydraulik-Fahrpumpe 32 wälzt diese Fluid, z. B. Hydrauliköl, in dem Hydraulik-Fahrkreislauf 30 um, wodurch ein in Fig. 1 nicht dargestellter Hydraulik-Fahrmotor oder ggf. mehrere Hydraulik-Fahrmotoren angetrieben werden, so dass ein Drehmoment beispielsweise auf die Antriebsräder 16 der Baumaschine 12 übertragen werden kann. Es ist hier darauf hinzuweisen, dass beispielsweise in Zuordnung zu jedem Antriebsrad 16 oder beispielsweise in Zuordnung zu jedem Kettenfahrwerk einer Baumaschine ein eigenständig aufgebauter und arbeitender Hydraulik-Fahrkreislauf vorgesehen sein kann.

Mit 34 ist ein weiterer Hydraulikkreislauf, nämlich ein Hydraulik-Arbeitskreislauf, bezeichnet. Auch dieser umfasst eine Hydraulikpumpe, hier also eine Hydraulik-Arbeitspumpe 36. Auch diese Hydraulik-Arbeitspumpe 36 kann mit der Getriebeanordnung 28 permanent gekoppelt sein oder beispielsweise über eine Kupplungsanordnung an die Getriebeanordnung 28 angekoppelt werden. Im Betrieb der Hydraulik-Arbeitspumpe 36 erzeugt diese eine Fluidumwälzung, z. B. von Hydrauliköl, im Hydraulik-Arbeitskreislauf 34. Auch im Hydraulik-Arbeitskreislauf 34 können ein bzw. mehrere Hydraulik-Arbeitsmotoren vorgesehen sein, durch welche beispielsweise die Unwuchtmassenanordnung in der Verdichterwalze 24 angetrieben werden kann.

Es ist darauf hinzuweisen, dass die Hydraulikpumpen 32, 36 vorteilhafterweise mit variablem Fördervolumen, beispielsweise als Taumelscheibenpumpen, ausgebildet sein können, um auf diese Art und Weise die Fluidumwälzung in den als Hochdruckkreisläufen ausgebildeten Hydraulikkreisläufen 30, 34 und somit das darin auch übertragbare Drehmoment einstellen zu können.

Das Antriebssystem 10 umfasst ferner eine allgemein mit 38 bezeichnete Hydraulik-Antriebsunterstützungseinheit. Diese umfasst eine Hydraulik-Pumpe/Motor-Baugruppe 40, die mit der Getriebeanordnung 28 permanent gekoppelt sein kann oder beispielsweise über eine Kupplungsanordnung an die Getriebeanordnung 28 angekoppelt oder ankoppelbar ist und auf diese Art und Weise mit der Getriebeanordnung 28 und über diese mit dem Antriebsaggregat 26 bzw. den Hydraulikkreisläufen 30, 34, insbesondere deren Hydraulikpumpen 32, 36 antriebsmäßig gekoppelt ist. Die HydraulikPumpe/Motor-Baugruppe 40 ist zwischen einem Betriebszustand, in welchem diese als Pumpe betreibbar ist, und einem Betriebszustand, in welchem diese als Motor betreibbar ist, umschaltbar. Vorteilhafterweise ist auch diese Baugruppe als Taumelscheibenaggregat aufgebaut.

Man erkennt in Fig. 1, dass die Hydraulik-Antriebsunterstützungseinheit 38 und das Antriebsaggregat 26 zueinander parallel über die Getriebeanordnung 28 mit den verschiedenen Hydraulikkreisläufen 30, 34 gekoppelt oder koppelbar sind. Somit ist ein nachfolgend detaillierter beschriebener direkter Drehmomentenaustausch beispielsweise zwischen dem Antriebsaggregat 26 und den Hydraulikkreisläufen 30, 34 und auch ein direkter Drehmomentenaustausch zwischen der Hydraulik-Antriebsunterstützungseinheit 38 und den Hydraulikkreisläufen 30, 34 möglich.

Die Hydraulik-Antriebsunterstützungseinheit 38 umfasst ferner einen Druckfluidspeicher 42, welcher durch den Betrieb der Hydraulik-Pumpe/Motor-Baugruppe 40 als Pumpe geladen werden kann. Dazu kann die HydraulikPumpe/Motor-Baugruppe 40 Fluid, z. B. Hydrauliköl, aus einem vorzugsweise drucklosen Fluidreservoir 44 in Richtung zum Druckfluidspeicher 42 fördern.

In einer von der Hydraulik-Pumpe/Motor-Baugruppe 40 zum Druckfluidspeicher 42 führenden Leitung 46 ist eine Lade/Entlade-Ventileinheit 48 vorgesehen. Diese z. B. durch elektrische Erregung zu verstellende Lade/Entlade-Ventileinheit 48 ist beispielsweise durch eine Vorspannfeder oder dergleichen in den in Fig. 1 dargestellten Grundzustand vorgespannt, in welchem sie die Strömungsverbindung zwischen der Hydraulik-Pumpe/Motor-Baugruppe 40 und dem Druckfluidspeicher 42 unterbricht. Dabei kann die Lade/Entlade-Ventileinheit 48 so ausgebildet sein, dass sie in diesem Zustand als Rückschlagventil wirksam ist, welches zwar einen Fluidstrom von der Hydraulik-Pumpe/Motor-Baugruppe 40 zum Druckfluidspeicher 42 zulässt, jedoch einen Fluidstrom in umgekehrter Richtung unterbindet. Beispielsweise durch elektrische Erregung der Lade/Entlade-Ventileinheit 48 wird diese in ihren Freigabezustand gebracht, in welchem die Strömungsverbindung zwischen dem Druckfluidspeicher 42 und der Hydraulik-Pumpe/Motor-Baugruppe 40 freigegeben ist.

Von dem zwischen dem Druckfluidspeicher 42 und der Lade/Entlade-Ventileinheit 48 liegenden Abschnitt 50 der Leitung 46 zweigt eine zum Fluidreservoir 44 führende Leitung 52 ab. Diese Leitung 52 stellt grundsätzlich eine Verbindung zwischen dem Druckfluidspeicher 42 und dem Fluidreservoir 44 her. In der Leitung 52 sind parallel zueinander drei Ventileinheiten 54, 56, 58 angeordnet. Die Ventileinheit 54 ist eine beispielsweise elektrisch erregbare Entspannungs-Ventileinheit 54, die beispielsweise durch Federvorspannung in einen Grundzustand vorgespannt ist, in welchem sie die Strömungsverbindung zwischen dem Druckfluidspeicher 42 und dem Fluidreservoir 44 freigibt. Bei Aktivierung der Entspannungs-Ventileinheit 54 beispielsweise durch elektrische Erregung wird diese in ihren die Strömungsverbindung zwischen dem Druckfluidspeicher 42 und dem Fluidreservoir 44 unterbrechenden Zustand geschaltet. Dabei kann die Entspannungs-Ventileinheit 54 so ausgebildet sein, dass sie in diesem Zustand als Rückschlagventil wirksam ist, welches eine Fluidströmung vom Fluidreservoir 44 in Richtung zum Druckfluidspeicher 42 grundsätzlich zulässt, eine Fluidströmung in umgekehrter Richtung jedoch unterbindet.

Parallel zur Entspannungs-Ventileinheit 54 ist eine Manuell-Entspannungs-Ventileinheit 56 vorgesehen. Diese kann durch manuelle Betätigung in ihren die Strömungsverbindung zwischen dem Druckfluidspeicher 42 und dem Fluidreservoir 44 freigebenden Zustand gebracht werden.

Parallel zu den Ventileinheiten 54, 56 ist in der Leitung 52 eine Überlast-Ventileinheit 58 vorgesehen, welche dann, wenn der Fluiddruck im Druckfluidspeicher 42 bzw. im Abschnitt 50 der Leitung 48 einen vorbestimmten Grenzdruck übersteigt, eine Entspannung des Druckfluidspeichers 42 zum Fluidreservoir 44 zulässt. Beispielsweise kann vorgesehen sein, dass bei maximaler Beladung im Druckfluidspeicher 42 ein Fluiddruck von etwa 300 bar vorherrschen soll. Bei derartiger Auslegung kann die Überlast-Ventileinheit 58 so dimensioniert sein, dass sie bei einen Druck von 300 bar übersteigendem Druck im Druckfluidspeicher 42 eine Strömungsverbindung zwischen dem Druckfluidspeicher 42 und dem Fluidreservoir 44 herstellt, bis der Fluiddruck im Druckfluidspeicher 42 wieder unter diesen Grenzwert abgefallen ist.

Die Hydraulik-Antriebsunterstützungseinheit 38 umfasst ferner eine Umwälz-Ventileinheit 60. Diese ist im Strömungsweg zwischen der HydraulikPumpe/Motor-Baugruppe 40 und dem Fluidreservoir 44 vorgesehen und zweigt von einem zwischen der Hydraulik-Pumpe/Motor-Baugruppe 40 und der Lade/Entlade-Ventileinheit 48 liegenden Abschnitt 62 der Leitung 46 ab. Die Umwälz-Ventileinheit 60 ist grundsätzlich in einen Zustand vorgespannt, in welchem eine Strömungsverbindung zwischen der Hydraulik-Pumpe/Motor-Baugruppe 40 und dem Fluidreservoir 44 besteht. Durch z. B. elektrische Erregung kann diese Umwälz-Ventileinheit 60 in einen Zustand gebracht werden, in welchem diese Strömungsverbindung unterbrochen ist. In diesem Zustand kann die Umwälz-Ventileinheit 60 als Rückschlagventil wirksam sein, das eine Strömung von der Hydraulik-Pumpe/Motor-Baugruppe 40 zum Fluidreservoir 44 unterbindet, eine Strömung in der anderen Richtung jedoch freigibt.

Die Umwälz-Ventileinheit 60 kann bei in der Sperrstellung positionierter Lade/Entlade-Ventileinheit 48 dann zum Herstellen einer Strömungsverbindung zwischen der Hydraulik-Pumpe/Motor-Baugruppe 40 und dem Fluidreservoir 44 genutzt werden, wenn eine Fluidumwälzung aus dem Fluidreservoir 44 und zurück in das Fluidreservoir 44 stattfinden soll, ohne dabei den Druckfluidspeicher 42 weiter zu laden. Dies kann vorteilhaft sein, um einen minimalen Fluidstrom durch die Hydraulik-Pumpe/Motor-Baugruppe 40 aufrecht zu erhalten, um im Bereich dieser Baugruppe generierte Wärme abzuführen.

Parallel zu der Umwälz-Ventileinheit 60 ist ferner eine Überlast-Ventileinheit 64 angeordnet, welche so dimensioniert sein kann, dass sie bei über dem maximalen Ladedruck liegendem Grenzdruck, beispielsweise bei einem Grenzdruck von etwa 330 bar, eine Strömungsverbindung zum Fluidreservoir 44 freigibt, um einen übermäßigen Druckaufbau insbesondere im Bereich der Leitung 46 zu verhindern.

Ferner ist parallel zur Umwälz-Ventileinheit 60 und zur Überlast-Ventileinheit 64 ein Rückschlagventil 66 vorgesehen. Dieses ist so geschaltet, dass es eine Strömung von dem Fluidreservoir 44 in die Leitung 46, insbesondere den Abschnitt 62 derselben, zulässt, eine Strömung in der anderen Richtung jedoch unterbindet, um auf diese Art und Weise das Entstehen eines Unterdrucks im Bereich der Leitung 46 zu verhindern.

In Zuordnung zu allen entweder durch elektrische Erregung oder durch manuelle Betätigung zu verstellenden und einen Strömungsweg zum Fluidreservoir 44 freigebenden Ventileinheiten, also der Entspannungs-Ventileinheit 54, der Manuell-Entspannungs-Ventileinheit 56 und der Umwälz-Ventileinheit 60, sind Strömungsdrosselanordnungen 68, 70, 72 vorgesehen, welche insbesondere beim Bestehen sehr großer Druckdifferenzen zwischen dem Druckfluidspeicher 42 und dem Fluidreservoir 44 eine Drosselung des Fluidstroms zum Fluidreservoir 44 bewirken.

Bei dem vorangehend beschriebenen Antriebssystem 10 besteht zwischen der Hydraulik-Antriebsunterstützungseinheit 38 und den für den Betrieb der Baumaschine 10 erforderlichen Hydraulikkreisläufen 30, 34 keine Fluidaustauschverbindung. Die Hydraulik-Antriebsunterstützungseinheit 38 ist mit den Hydraulikkreisläufen 30, 34 ausschließlich antriebsmäßig, also mechanisch gekoppelt, nämlich über die Getriebeanordnung 28. Dies gestattet es, die Hydraulik-Antriebsunterstützungseinheit 38 als offenen Kreislauf, also als Niederdruckkreislauf auszugestalten, während die Hydraulikkreisläufe 30, 34 als geschlossene Hydraulikkreisläufe, also als Hochdruckkreisläufe, ausgebildet sein können.

Das in Fig. 1 dargestellte Antriebssystem 10 kann in verschiedenen Betriebsmodi arbeiten. Die Fig. 1 zeigt einen Zustand, bei welchem die Hydraulik-Antriebsunterstützungseinheit 38 so geschaltet ist, dass der Druckfluidspeicher 42 in Verbindung mit dem Fluidreservoir 44 ist, also ein darin ggf. aufgebauter Druck sich entspannen kann bzw. kein Druck aufgebaut wird. Dies ist ein Zustand, der dann eingenommen werden kann, wenn das Antriebssystem 10 außer Betrieb ist.

Soll das Antriebssystem 10 betrieben werden, beispielsweise um den in Fig. 2 dargestellten Bodenverdichter voranzubewegen und dabei auch unter Ausnutzung von Vibrations- oder/und Oszillationsbewegungen der Verdichterwalze 24 den Untergrund 18 zu verdichten, wird die Lade/Entlade-Ventileinheit 48 erregt, so dass sie in ihren eine Verbindung zwischen dem Druckfluidreservoir 42 und der Hydraulik-Pumpe/Motor-Baugruppe 40 herstellenden Zustand ist. Gleichzeitig werden auch die Entspannungs-Ventileinheit 54 und die Umwälz-Ventileinheit 60 angesteuert bzw. erregt, um sie in ihren Sperrzustand zu bringen. Das Antriebsaggregat 26 kann in diesem Zustand über die Getriebeanordnung 28 die beiden Hydraulikpumpen 32, 36 für den Fahrantrieb und den Antrieb der Unwuchtmassenanordnung antreiben. Ferner wird die Hydraulik-Pumpe/Motor-Baugruppe 40 angetrieben, so dass diese als Pumpe arbeitend Fluid aus dem Fluidreservoir 44 in den Druckfluidspeicher 42 fördert. Dieser Zustand kann so lange beibehalten werden, bis der Druckfluidspeicher 42 eine Schwellenbeladung erreicht hat, die beispielsweise bei 85 % der maximalen Beladung liegen kann. Bei einem maximalen Ladedruck von etwa 300 bar kann diese Schwellenbeladung also einem Ladedruck von etwa 255 bar entsprechen.

Ist dieser Zustand erreicht, kann die Hydraulik-Pumpe/Motor-Baugruppe 44 weiterhin im Pumpenbetrieb, wenngleich mit geminderter Förderleistung weiterbetrieben werden, um etwaige Leckageverluste aus dem Druckfluidspeicher 42 über die diesen insbesondere in Richtung zum Fluidreservoir 44 hin absperrenden Ventileinheiten zu kompensieren und dafür zu sorgen, dass ein Druck aufrecht erhalten bleibt, der in etwa der Schwellenbeladung entspricht.

Wird im Betrieb der Baumaschine 12 Energie frei, beispielsweise weil diese verzögert werden soll oder der Betrieb der Unwuchtmassenanordnung eingestellt werden soll, so findet in den Hydraulikkreisläufen 30, 34 eine Umkehr der Drehmomentenübertragungsrichtung statt, so dass vorübergehend die Hydraulikpumpen 32, 36, angetrieben durch einen durch die jeweiligen nicht dargestellten Hydraulikmotoren generierten Fluidstrom, als Motoren wirksam sind und ein Drehmoment in die Getriebeanordnung 28 einleiten. Dieses Drehmoment kann über die Getriebeanordnung 28 in die HydraulikPumpe/Motor-Baugruppe 40 eingeleitet werden, welche dann wieder als Pumpe genutzt werden kann, um den Druck im Druckfluidspeicher 42 weiter zu erhöhen, beispielsweise bis der maximale Ladedruck erreicht ist. Dazu wird die Hydraulik-Pumpe/Motor-Baugruppe 40 in einen Zustand mit erhöhter Förderleistung gestellt, so dass der erforderliche bzw. gewünschte Druckaufbau im Druckfluidspeicher 42 erreicht wird. Dieser Vorgang kann so lange fortgesetzt bzw. so oft wiederholt werden, bis die maximale Beladung des Druckfluidspeichers 42, also der maximale Ladedruck von beispielsweise 300 bar, erreicht ist. Ist dies der Fall, kann die Hydraulik-Pumpe/Motor-Baugruppe 40 wieder in einen Zustand mit geringerer Förderleistung bzw. Förderrate verstellt werden, um dafür zu sorgen, dass im Druckfluidspeicher 42 der unter Ausnutzung wenigstens eines Energierückgewinnungsvorgangs auf den maximalen Ladedruck erhöhte Druck aufrecht erhalten bleibt.

Es ist darauf hinzuweisen, dass dieser Energierückgewinnungsbetrieb zum weiteren Beladen des Druckfluidspeichers 42 auch dann genutzt werden kann, wenn nur aus einem der beiden Hydraulikkreisläufe 30, 34 die Rückgewinnung von Energie möglich ist. Ferner kann auch in diesem Zustand das Antriebsaggregat 26 noch genutzt werden, um ein zusätzliches Drehmoment in die Getriebeanordnung 28 einzuleiten, insbesondere wenn in einen Energierückgewinnungsbetrieb übergegangen werden kann, gleichzeitig der Druckfluidspeicher 42 jedoch noch nicht den Zustand der Schwellenbeladung von beispielsweise etwa 85 % der maximalen Beladung erreicht hat.

Insbesondere im Energierückgewinnungsbetrieb ist es besonders vorteilhaft, dass über die Getriebeanordnung 28 eine direkte Verbindung zwischen den Hydraulikkreisläufen 30, 34 und der Hydraulik-Antriebsunterstützungseinheit 38 besteht, so dass die im Energierückgewinnungsbetrieb freigesetzte Energie ohne beispielsweise über das Antriebsaggregat 26 geleitet zu werden in Richtung zur Hydraulik-Antriebsunterstützungseinheit 38 geleitet werden kann.

Besteht im Bereich von einem oder beiden Hydraulikkreisläufen 30, 34 eine hohe Drehmomentenanforderung, beispielsweise weil kurzzeitig die Baumaschine 12 eine vergleichsweise hohe Steigung überwinden soll oder über eine Randsteinkante oder ein sonstiges Hindernis hinweg bewegt werden soll, kann die im Druckfluidspeicher 42 gespeicherte Energie genutzt werden, um bei Betreiben der Hydraulik-Pumpe/Motor-Baugruppe 40 als Motor ein Antriebsunterstützungsdrehmoment in die Getriebeanordnung 28 einzuleiten und dieses über die Getriebeanordnung 28 zu einem oder beiden Hydraulikkreisläufen 30, 40 zu leiten, also zum unterstützenden Antreiben der jeweiligen Hydraulikpumpe 32 bzw. 36 zu nutzen. In diesem Zustand kann beispielsweise auch das Antriebsaggregat 26 so betrieben werden, dass es das durch dieses maximal bereitstellbare Antriebsdrehmoment liefern kann, so dass ein Gesamtantriebsdrehmoment über die Getriebeanordnung 28 zu den Hydraulikkreisläufen 30, 34 geleitet wird, welches sich aus dem Antriebsdrehmoment des Antriebsaggregats 26, beispielsweise dem maximalen Antriebsdrehmoment desselben, und dem Antriebsunterstützungsdrehmoment der Hydraulik-Antriebsunterstützungseinheit 38 zusammensetzt. Um diesen Zustand zu erreichen, ist die Lade/Entlade-Ventileinheit 48 in ihren Freigabezustand geschaltet, so dass der Druckfluidspeicher 42 sich über die Hydraulik-Pumpe/Motor-Baugruppe 40 in Richtung zum Fluidreservoir 44 entleeren kann. Das in diesem Antriebsunterstützungsbetriebszustand durch die Hydraulik-Antriebsunterstützungseinheit 38 bereitstellbare Drehmoment kann durch entsprechende Verstellung der Hydraulik-Pumpe/Motor-Baugruppe 40 im Motorbetrieb variiert werden.

Die Ausgestaltung des Antriebssystems 10 ermöglicht es, das Antriebsaggregat 26 so hinsichtlich des durch dieses maximal bereitstellbaren Antriebsdrehmoments auszulegen, dass dieses maximale Antriebsdrehmoment kleiner ist, als ein im Betrieb der Baumaschine 12 maximal auftretendes Anforderungsdrehmoment. Da in Zuständen, in welchen eine derartige Drehmomentenanforderung vorliegt, die Hydraulik-Antriebsunterstützungseinheit 38 das Antriebsunterstützungsdrehmoment bereitstellen kann, ist es möglich, ein Gesamtantriebsdrehmoment in die Hydraulikkreisläufe 30, 34 einzuleiten, welches dem angeforderten Drehmoment entspricht, um somit die Baumaschine 12 in geeigneter Weise betreiben zu können.

Durch diese Auslegung des Antriebsaggregats 26 mit vergleichsweise niedrigem maximalem Antriebsdrehmoment wird bei allgemein geringer Baugröße eine effiziente Energieausnutzung gewähleistet, bei welcher insbesondere auch die in verschiedenen Zuständen der Baumaschine 12 frei werdende Energie genutzt werden kann, um den Druckfluidspeicher 42 zu laden.

Es sei darauf hingewiesen, dass das in Fig. 1 dargestellte Antriebssystem insbesondere hinsichtlich der Ausgestaltung der Hydraulik-Antriebsunterstützungseinheit in verschiedenster Weise variiert werden kann. So könnten selbstverständlich mehrere beispielsweise parallel geschaltete Druckfluidspeicher vorgesehen sein. Auch können die verschiedenen Ventile bzw. Ventileinheiten jeweils als separat aufgebaute und durch Leitungen miteinander verbundene Baugruppen vorgesehen sein oder können in einen Ventilblock integriert sein, was zu einer kompakten, gleichwohl jedoch mit hoher Betriebssicherheit arbeitenden Ausgetaltung beiträgt.

Ferner können beispielsweise die verschiedenen Hydraulikpumpen ebenso wie die Hydraulik-Pumpe/Motor-Baugruppe mit der Getriebeanordnung 28 permanent, also nicht über den Drehmomentenfluss unterbrechende Kupplungsanordnungen oder dergleichen gekoppelt sein. Durch die Verstellung dieser beispielsweise als Taumelscheibenaggregate ausgebildeten Pumpen bzw. Baugruppen kann dann die Drehmomentenanforderung bzw. Fluidförderrate bzw. -leistung variiert werden. Soll ein jeweiliger Hydraulikkreislauf bzw. die Hydraulik-Antriebsunterstützungseinheit nicht betrieben werden, so können die Hydraulikpumpen bzw. die Hydraulik-Pumpe/Motor-Baugruppe in einen Neutralzustand geschaltet werden.

## Patentansprüche

1. Antriebssystem, insbesondere für eine selbstfahrende Baumaschine, insbesondere Bodenverdichter, umfassend:
- ein Antriebsaggregat (26),
- wenigstens einen Hydraulikkreislauf (30, 34) mit einer durch das Antriebsaggregat (22) antreibbaren Hydraulikpumpe (32, 36),
- eine Hydraulik-Antriebsunterstützungseinheit (38) mit einer Hydraulik-Pumpe/Motor-Baugruppe (40) und wenigstens einem Druckfluidspeicher (42), wobei die Hydraulik-Pumpe/Motor-Baugruppe (40) mit dem Antriebsaggregat (26) oder/und wenigstens einem Hydraulikkreislauf (30, 34) antriebsmäßig gekoppelt oder koppelbar ist, wobei die Hydraulik-Pumpe/Motor-Baugruppe (40) in einem Ladebetriebszustand durch das Antriebsaggregat (26) oder/und wenigstens einen Hydraulikkreislauf (30, 34) als Pumpe zum Beladen wenigstens eines Druckfluidspeichers (42) betreibbar ist und in einem Antriebsunterstützungsbetriebszustand als Motor zur Bereitstellung eines Antriebsunterstützungsdrehmomentes für die Hydraulikpumpe (32, 36) wenigstens eines Hydraulikkreislaufs (30, 34) betreibbar ist, wobei
ein durch das Antriebsaggregat (26) bereitstellbares maximales Antriebsdrehmoment kleiner ist, als ein zum Betreiben wenigstens eines Hydraulikkreislaufs (30, 34) aufzubringendes maximales Anforderungsdrehmoment,
**dadurch gekennzeichnet, dass** die Hydraulik-Pumpe/Motor-Baugruppe (40) im Ladebetriebszustand nur dann im Wesentlichen durch das Antriebsaggregat (26) angetrieben wird, wenn der Ladezustand wenigstens eines Druckfluidspeichers (42) nicht über einer vorbestimmten Schwellenbeladung ist, und dass bei über der Schwellenbeladung liegendem Ladezustand des wenigstens einen Druckfluidspeichers (42) die Hydraulik-Pumpe/Motor-Baugruppe (40) im Ladebetriebszustand im Wesentlichen durch wenigstens einen Hydraulikkreislauf (30, 34) angetrieben wird.

2. Antriebssystem nach Anspruch 1,
**dadurch gekennzeichnet, dass** ein durch das maximale Antriebsdrehmoment und ein durch die Hydraulik-Antriebsunterstützungseinheit (38) bereitstellbares maximales Antriebsunterstützungsdrehmoment bereitgestelltes maximales Gesamtantriebsdrehmoment größer oder gleich dem maximalen Anforderungsdrehmoment ist.

3. Antriebssystem nach Anspruch 1 oder 2,
**dadurch gekennzeichnet, dass** als Hydraulikkreislauf (30, 34) wenigstens ein Hydraulik-Fahrkreislauf (30) für den Fahrantrieb vorgesehen ist mit einer durch das Antriebsaggregat (26) oder/und die Hydraulik-Antriebsunterstützungseinheit (38) antreibbaren Hydraulik-Fahrpumpe (32) oder/und wenigstens ein Hydraulik-Arbeitskreislauf (34) für den Arbeitsbetrieb vorgesehen ist mit einer durch das Antriebsaggregat (26) oder/und die Hydraulik-Antriebsunterstützungseinheit (38) antreibbaren Hydraulik-Arbeitspumpe (36).

4. Antriebssystem nach Anspruch 3,
**dadurch gekennzeichnet, dass** wenigstens ein Hydraulik-Arbeitskreislauf (34) zum Antrieb einer in Zuordnung zu einer Verdichterwalze (24) eines Bodenverdichters vorgesehenen Unwuchtmassenanordnung vorgesehen ist.

5. Antriebssystem nach einem der Ansprüche 1 bis 4,
**dadurch gekennzeichnet, dass** die vorbestimmte Schwellenbeladung ein Ladezustand mit einer Beladung im Bereich von 80 bis 90 %, vorzugsweise etwa 85 %, einer maximalen Beladung des wenigstens einen Druckspeichers (42) ist.

6. Antriebssystem nach einem der Ansprüche 1 bis 5,
**dadurch gekennzeichnet, dass** die Hydraulik-Antriebsunterstützungseinheit (38) eine Lade/Entlade-Ventileinheit (48) zum wahlweisen Freigeben/Unterbrechen einer Strömungsverbindung zwischen der Hydraulik-Pumpe/Motor-Baugruppe (40) und wenigstens einem Druckfluidspeicher (42) wenigstens in Strömungsrichtung vom Druckfluidspeicher (42) zur Hydraulik-Pumpe/Motor-Baugruppe (40) umfasst und eine Entspannungs-Ventileinheit (54) zum wahlweisen Freigeben/Unterbrechen einer Strömungsverbindung zwischen wenigstens einem Druckfluidspeicher (42) und einem Fluidreservoir (44) wenigstens in Strömungsrichtung vom Druckfluidspeicher (42) zum Fluidreservoir (44) umfasst.

7. Antriebssystem nach Anspruch 6,
**dadurch gekennzeichnet, dass** die Lade/Entlade-Ventileinheit (48) in einen die Strömungsverbindung unterbrechenden Grundzustand vorgespannt ist oder/und dass die Entspannungs-Ventileinheit (54) in einen die Strömungsverbindung freigebenden Grundzustand vorgespannt ist.

8. Antriebssystem nach einem der Ansprüche 1 bis 7,
**dadurch gekennzeichnet, dass** die Hydraulik-Antriebsunterstützungseinheit (38) einen offenen Kreislauf umfasst.

9. Antriebssystem nach einem der Ansprüche 1 bis 8,
**dadurch gekennzeichnet, dass** zwischen wenigstens einem Fluidkreislauf (30, 34), vorzugsweise allen Fluidkreisläufen (30, 34), und der Hydraulik-Antriebsunterstützungseinheit (38) keine Fluidaustauschverbindung besteht.

10. Antriebssystem nach einem der Ansprüche 1 bis 9,
**dadurch gekennzeichnet, dass** das Antriebsaggregat (26) eine Diesel-Brennkraftmaschine umfasst.

11. Antriebssystem nach einem der Ansprüche 1 bis 10,
**dadurch gekennzeichnet, dass** das Antriebsaggregat (26) und die Hydraulik-Antriebsunterstützungseinheit (38) zueinander parallel über eine Getriebeanordnung (28) mit wenigstens einem Hydraulikkreislauf (30, 34), vorzugsweise einer Mehrzahl von Hydraulikkreisläufen (30, 34), gekoppelt oder koppelbar ist.

12. Selbstfahrende Baumaschine, insbesondere Bodenverdichter, umfassend ein Antriebssystem (10) nach einem der vorhergehenden Ansprüche.

## Claims

1. A drive system, in particular for a self-propelled construction machine, especially a soil compactor, comprising:
- a drive unit (26),
- at least one hydraulic circuit (30, 34) with a hydraulic pump (32, 36) drivable by the drive unit (22),
- a hydraulic drive support unit (38) with a hydraulic pump/motor assembly (40) and at least one compressed fluid reservoir (42), wherein the hydraulic pump/motor assembly (40) is, or can be, drivingly connected to the drive unit (26) or/and to at least one hydraulic circuit (30, 34), wherein the hydraulic pump/motor assembly (40) is drivable in a charging operating mode as a pump by means of the drive unit (26) or/and by means of at least one hydraulic circuit (30, 34) for charging at least one compressed fluid reservoir (42), and in a drive support operation state is drivable as a motor to provide a drive support torque for the hydraulic pump (32, 36) of at least one hydraulic circuit (30, 34), wherein
a maximum drive torque provided by the drive unit (26) is smaller than a maximum request torque to be applied for operating at least one hydraulic circuit (30, 34), **characterized in that** the hydraulic pump/motor assembly (40) in the charging operating mode is only essentially driven by the drive unit (26) when the charge state of at least one compressed fluid reservoir (42) is not above a predetermined threshold charge and **in that** when the charge state of the at least one compressed fluid reservoir (42) is above the threshold charge, the hydraulic pump/motor assembly (40) in the charge operating mode is essentially driven by means of at least one hydraulic circuit (30, 34).

2. The drive system according to claim 1,
**characterized in that** a maximum total drive torque that can be provided by the maximum drive torque and a maximum drive support torque generated by the hydraulic drive support unit (38) is larger than or equal to the maximum request torque.

3. A drive system according to claim 1 or 2,
**characterized in that** at least one hydraulic driving circuit (30) is provided as a hydraulic circuit (30, 34) for the traction drive with a hydraulic driving pump (32) drivable by the drive unit (26) or/and by the hydraulic drive support unit (38), or/and at least one hydraulic working circuit (34) is provided for the working mode with a hydraulic working pump (36) drivable by the drive unit (26) or/and by the hydraulic drive support unit (38).

4. The drive system according to claim 3,
**characterized in that** at least one hydraulic working circuit (34) is provided to drive an unbalance mass arrangement provided on the compactor roller (24) allocated to a soil compactor.

5. The drive system according to any one of claims 1 to 4,
**characterized in that** the predetermined threshold charge is a charge state with a charge in the range of 80 to 90%, preferably about 85%, of a maximum charge of the at least one pressure reservoir (42).

6. A drive system according to any one of claims 1 to 5,
**characterized in that** the hydraulic drive support unit (38) comprises a charge/discharge valve unit (48) for optionally enabling/disabling a flow connection between the hydraulic pump/motor assembly (40) and at least one compressed fluid reservoir (42) at least in the flow direction from the compressed fluid reservoir (42) to the hydraulic pump/motor assembly (40) and comprises a relief valve unit (54) for optionally enabling/disabling a flow connection between at least one compressed fluid reservoir (42) and a fluid reservoir (44), at least in the flow direction from the compressed fluid reservoir (42) to the fluid reservoir (44).

7. The drive system according to claim 6,
**characterized in that** the charge/discharge valve unit (48) is pre-tensioned to a basic state which interrupts the flow connection, or/and that the relief valve unit (54) is pre-tensioned to a basic state releasing the flow connection.

8. A drive system according to any one of claims 1 to 7,
**characterized in that** the hydraulic drive support unit (38) comprises an open circuit.

9. A drive system according to any one of claims 1 to 8,
**characterized in that** there is no fluid exchange connection between at least one fluid circuit (30, 34), preferably between all fluid circuits (30, 34), and the hydraulic drive support unit (38).

10. A drive system according to any one of claims 1 to 9,
**characterized in that** the drive unit (26) comprises a diesel internal combustion engine.

11. A drive system according to any one of claims 1 to 10,
**characterized in that** the drive unit (26) and the hydraulic drive support unit (38) are, or can be, coupled parallel to each other via a transmission arrangement (28) with at least one hydraulic circuit (30, 34), preferably with a plurality of hydraulic circuits (30, 34).

12. A self-propelled construction machine, in particular a soil compactor, comprising a drive system (10) according to any one of the preceding claims.

## Revendications

1. Un système d'entraînement, en particulier pour une machine de construction autotractée, en particulier un compacteur de sol, comprenant:
- une unité d'entraînement (26),
- au moins un circuit hydraulique (30, 34) avec une pompe hydraulique (32, 36) à entraîner par l'unité d'entraînement (22),
- une unité de support d'entraînement hydraulique (38) avec un module pompe hydraulique/moteur (40) et au moins un réservoir de fluide sous pression (42), où le module pompe hydraulique/moteur (40) est ou peut être connecté pour un entraînement à l'unité d'entraînement (26) ou/et à au moins un circuit hydraulique (30, 34), où le module pompe hydraulique/moteur (40) peut être entraîné dans un mode opératoire de chargement comme pompe par l'unité d'entraînement (26) et/ou par au moins un circuit hydraulique (30, 34) pour charger au moins un réservoir de fluide sous pression (42), et dans un état de support d'entraînement peut être entraîné en tant que moteur pour prévoir un couple de support d'entraînement pour la pompe hydraulique (32, 36) d'au moins un circuit hydraulique (30, 34), où
un couple d'entraînement maximal prévu par l'unité d'entraînement (26) est plus petit qu'un couple demandé maximal à appliquer pour opérer au moins un circuit hydraulique (30, 34), **caractérisé en ce que** le module pompe hydraulique/moteur (40) dans le mode opératoire de chargement est seulement essentiellement entraîné par l'unité d'entraînement (26) quand l'état de chargement d'au moins un réservoir de fluide sous pression (42) n'est pas plus grand qu'une limite prédéterminée et **en ce que** quand l'état de chargement dudit au moins un réservoir de fluide sous pression (42) est plus grand que le chargement limite, le module pompe hydraulique/moteur (40) dans le mode opératoire de chargement est essentiellement entraîné par au moins un circuit hydraulique (30, 34).

2. Système d'entraînement selon la revendication 1,
**caractérisé en ce qu'**un couple de support d'entraînement maximal qui peut être prévu par le couple d'entraînement maximal et un couple de support d'entraînement maximal généré par l'unité de support d'entraînement hydraulique (38) est plus grand que ou égal au couple demandé maximal.

3. Système d'entraînement selon les revendications 1 ou 2,
**caractérisé en ce qu'**au moins un circuit de traction hydraulique (30) est prévu en tant que circuit hydraulique (30, 34) pour l'entraînement de traction avec une pompe de traction hydraulique (32) qui peut être entraîné par l'unité d'entraînement (26) ou/et par l'unité de support d'entraînement hydraulique (38), ou/et au moins un circuit de travail hydraulique (34) est prévu pour le mode de travail avec une pompe de travail hydraulique (36) qui peut être entraîné par l'unité d'entraînement (26) ou/et par l'unité de support d'entraînement hydraulique (38).

4. Système d'entraînement selon la revendication 3,
**caractérisé en ce qu'**au moins un circuit de travail hydraulique (34) est prévu pour entraîner un arrangement de masses de balourd prévu au rouleau compacteur (24) associé à un compacteur de sol.

5. Système d'entraînement selon une des revendications 1 à 4,
**caractérisé en ce que** le chargement limite prédéterminé est un état de chargement avec un chargement dans la gamme de 80 à 90 %, de préférence d'environ 85 %, d'un chargement maximal dudit au moins un réservoir sous pression (42).

6. Système d'entraînement selon une des revendications 1 à 5,
**caractérisé en ce que** l'unité de support d'entraînement hydraulique (38) comprend une unité de vanne de chargement/déchargement (48) pour permettre/interdire optionnellement une communication fluide entre le module pompe hydraulique/moteur (40) et au moins un réservoir de fluide sous pression (42) au moins dans le sens d'écoulement du réservoir de fluide sous pression (42) au module pompe hydraulique/moteur (40) et comprend une unité de vanne de détente (54) pour permettre/interdire optionnellement une communication fluide entre au moins un réservoir de fluide sous pression (42) et un réservoir de fluide (44), au moins dans le sens d'écoulement du réservoir de fluide sous pression (42) au réservoir de fluide (44).

7. Système d'entraînement selon la revendication 6,
**caractérisé en ce que** la vanne de chargement/déchargement (48) est précontrainte dans un état de base interrompant la communication fluide ou/et **en ce que** l'unité de vanne de détente (54) est précontrainte dans un état de base libérant la communication fluide.

8. Système d'entraînement selon une des revendications 1 à 7,
**caractérisé en ce que** l'unité de support d'entraînement hydraulique (38) comprend un circuit ouvert.

9. Système d'entraînement selon une des revendications 1 à 8,
**caractérisé en ce qu'**il n'y a aucune connexion d'échange entre au moins un circuit de fluide (30, 34), de préférence tous les circuits de fluide (30, 34) et l'unité de support d'entraînement hydraulique (38).

10. Système d'entraînement selon une des revendications 1 à 9,
**caractérisé en ce que** l'unité d'entraînement (26) comprend un moteur diesel à combustion interne.

11. Système d'entraînement selon une des revendications 1 à 10,
**caractérisé en ce que** l'unité d'entraînement (26) et l'unité de support d'entraînement hydraulique (38) sont accouplés ou peuvent être accouplés en parallèle via un arrangement de transmission (28) avec au moins un circuit hydraulique (30, 34), de préférence avec une pluralité de circuits hydrauliques (30, 34).

12. Une machine de construction autotractée en particulier un compacteur de sol, comprenant un système d'entraînement (10) selon une des revendications précédentes.
